# EUROPÄISCHE PATENTSCHRIFT

(11) **EP 2 965 396 B1**
(45) Veröffentlichungstag und Bekanntmachung des Hinweises auf die Patenterteilung: **19.12.2018**
(21) Anmeldenummer: 14704753.4
(22) Anmeldetag: 14.02.2014
(51) Int. Cl.: H02J 3/12, G05B 19/04, H02J 3/14, G01D 4/00, G05B 19/042

(54) **ELEKTROGERÄT UND VERFAHREN ZUM STEUERN DES BETRIEBS EINES ELEKTROGERÄTES**
ELECTRICAL APPLIANCE AND METHOD FOR CONTROLLING THE OPERATION OF AN ELECTRICAL APPLIANCE
APPAREIL ÉLECTRIQUE ET PROCÉDÉ PERMETTANT DE COMMANDER LE FONCTIONNEMENT D'UN APPAREIL ÉLECTRIQUE

(30) Priorität: 06.03.2013 DE 102013003852
(43) Veröffentlichungstag der Anmeldung: 13.01.2016
(73) Patentinhaber: Diehl AKO Stiftung & Co. KG, 88239 Wangen (DE)
(72) Erfinder: GLASMACHER, Mathias, 68799 Reilingen (DE)
(74) Vertreter: Diehl Patentabteilung
(86) Internationale Anmeldenummer: PCT/EP2014/000414
(87) Internationale Veröffentlichungsnummer: WO 2014/135250

(56) Entgegenhaltungen:
- EP-A2- 2 481 844
- WO-A1-2012/000538
- US-A1- 2003 178 894
- US-A1- 2011 251 731
- US-A1- 2012 101 652
- US-A1- 2012 215 370

## Beschreibung

Die vorliegende Erfindung betrifft ein Elektrogerät, insbesondere ein elektronisches Haushaltsgerät, welches in ein intelligentes Energieversorgungsnetz integriert werden kann, und ein Verfahren zum Steuern des Betriebs eines solchen Elektrogerätes.

Elektronische Haushalts(groß)geräte, wie beispielsweise Waschmaschinen, Wäschetrockner, Spülmaschinen, Backöfen und dergleichen, verwenden in der Regel vordefinierte Programmabläufe. So gibt es zum Beispiel ein Waschprogramm für Baumwolle mit 60°C und 900 U/min oder ein 90%-Trockenprogramm für Synthetik, jeweils mit Programmlaufzeiten von beispielsweise etwa 30 bis 90 Minuten.

Außerdem sind Hausautomationssysteme (Smart Home, Smart House) bekannt, in denen mehrere elektrische Lasten bzw. Verbraucher (Aktoren, Sensoren, Steuerungen, Haushaltsgeräte, etc.) miteinander vernetzt sind. In solchen Hausautomationssystemen können die Verbraucher zentral angesteuert, der Betrieb optimiert, Daten ausgetauscht, Überwachungsfunktionen realisiert werden und dergleichen. Es sind hierzu verschiedene, zum Teil herstellerspezifische Systeme und Kommunikationsprotokolle bekannt.

Darüber hinaus werden intelligente Energieversorgungs- bzw. Stromnetze (Smart Grid) entwickelt, in welchen Stromerzeuger, elektrische Speicher, elektrische Verbraucher, Netzbetriebsmittel, Messgeräte (Smart Meters) kommunikativ und steuerungstechnisch miteinander vernetzt sind. In solchen intelligenten Energieversorgungsnetzen sollen insbesondere die Stromerzeugung und die angeschlossenen Lasten gesteuert, kontrolliert und möglichst aufeinander abgestimmt werden. Derartige intelligente Energieversorgungsnetze gewinnen in Zusammenhang mit den erneuerbaren Energien, deren Stromerzeugungsleistungen stark schwanken können, immer mehr an Bedeutung. Die Regelung der Energieströme in solchen volatilen Energieversorgungsnetzen kann auch als Demand Control bezeichnet werden.

Es ist in diesem Zusammenhang auch bekannt, die Hausautomation mit einem intelligenten Energieversorgungsnetz zu koppeln. So können zum Beispiel Informationen über die zur Verfügung stehende Energie aus dem Energieversorgungsnetz in dem Hausautomationssystem genutzt werden, bestimmte Verbraucher insbesondere dann zu betreiben, wenn viel und/oder kostengünstige Energie zur Verfügung steht. Mit einem einfachen Ein- und Ausschalten der Verbraucher in Abhängigkeit von den zur Verfügung stehenden Energieressourcen kann bei herkömmlichen Systemen jedoch nicht auf Veränderungen auf kürzeren Zeitskalen reagiert werden, wie sie bei Windkraft- und Photovoltaikanlagen üblich sind.

Die US 2012/0215370 A1 offenbart ein elektronisches Haushaltsgerät, dessen Steuervorrichtung über eine Kommunikationsschnittstelle mit einem intelligenten Energieversorgungsnetz kommunizieren kann, um das Haushaltsgerät in Abhängigkeit von den aktuellen Energiepreisen in einem Normalbetriebsmodus oder einem Energiesparbetriebsmodus zu betreiben, der zu Beginn eines von einem Benutzer angewählten Programmablaufs ausgewählt wird.

Aus der EP 2 481 844 A2 ist ein ebensolches Hausgerät bekannt, das aus einem intelligenten Energieversorgungsnetz erhaltene Informationen verwendet, um Änderungen in der Ausführung vorzunehmen und das Hausgerät nach einem abgeänderten Programmablauf anzusteuern.

Es ist deshalb die Aufgabe der Erfindung, verbesserte Elektrogeräte und verbesserte Betriebsverfahren für Elektrogeräte zu schaffen, welche für den Einsatz in Zusammenhang mit intelligenten Energieversorgungsnetzen geeignet sind.

Diese Aufgabe wird gelöst durch die Lehre der unabhängigen Ansprüche. Besonders bevorzugte Ausgestaltungen und Weiterbildungen der Erfindung sind Gegenstand der abhängigen Ansprüche.

Das erfindungsgemäße Elektrogerät weist wenigstens ein Aggregat, eine Bedienvorrichtung zum Anwählen eines Programmablaufes aus wenigstens einem vordefinierten Programmablauf durch einen Benutzer des Elektrogerätes, eine Steuervorrichtung zum Ansteuern des wenigstens einen Aggregats nach dem angewählten Programmablauf, und eine Kommunikationsschnittstelle, über welche die Steuervorrichtung mit einem intelligenten Energieversorgungsnetz kommunizieren kann, auf. Die Steuervorrichtung ist ausgestaltet, um den angewählten Programmablauf in Abhängigkeit von über die Kommunikationsschnittstelle aus dem intelligenten Energieversorgungsnetz empfangenen Energieversorgungsinformationen während seiner Ausführung innerhalb vorbestimmter Grenzen abzuändern und das wenigstens eine Aggregat nach dem abgeänderten Programmablauf anzusteuern.

Das Elektrogerät der Erfindung kann über die Kommunikationsschnittstelle mit dem intelligenten Energieversorgungsnetz kommunizieren, insbesondere Energieversorgungsinformationen empfangen. Da das Steuergerät in der Lage ist, einen angewählten Programmablauf während seiner Ausführung (zumindest innerhalb vorbestimmter Grenzen) abzuändern, kann das Elektrogerät im Gegensatz zu herkömmlichen Systemen auch auf kurzfristige Veränderungen im Energieversorgungsnetz flexibel reagieren. Die Vorteile eines intelligenten Energieversorgungsnetzes können bei einer Integration bzw. Anbindung des erfindungsgemäßen Elektrogerätes in/an ein solches besser genutzt werden, da Lastbetrieb und Energieangebot besser aufeinander abgestimmt bzw. synchronisiert werden können. Die Energiesparmöglichkeiten sind daher noch vielfältiger und größer als bei herkömmlichen Elektrogeräten.

Die Erfindung ist insbesondere bei elektronischen Haushaltsgeräten, speziell Haushaltsgroßgeräten, wie Waschmaschinen, Wäschetrocknern, Spülmaschinen, Backöfen, Wärmepumpen und dergleichen in vorteilhafter Weise einsetzbar, ohne dass die Erfindung auf diese Art von Elektrogeräten beschränkt sein soll.

Das Elektrogerät weist wenigstens ein Aggregat auf. Unter einem "Aggregat" soll in diesem Zusammenhang eine technische Komponente des Elektrogerätes verstanden werden, welche eine bestimmte, typischerweise gerätespezifische Funktion erfüllt. Zu den Aggregaten in diesem Sinne zählen - je nach Art des jeweiligen Elektrogerätes - insbesondere, aber nicht ausschließlich Heizungen, Fluidpumpen, Elektromotoren (z.B. für Wäschetrommeln), Lüfter, Kühler und dergleichen.

Das Elektrogerät weist eine Bedienvorrichtung auf. Diese Bedienvorrichtung weist vorzugsweise am Elektrogerät angebrachte Ein- und/oder Ausgabevorrichtungen (zum Beispiel in Form einer Bedienblende) und/oder eine Schnittstelle zum Kommunizieren mit separaten Ein- und/oder Ausgabevorrichtungen (z.B. Fernsteuerung, in das intelligente Energieversorgungsnetz integrierte Steuerung, etc.) auf.

Das Elektrogerät hat wenigstens einen "vordefinierten Programmablauf", d.h. einen vorgegebenen zeitlichen Ablauf von Betriebszuständen eines oder mehrerer Aggregate. Zu den vordefinierten Programmabläufen zählen in diesem Sinne - je nach Art des jeweiligen Elektrogerätes - insbesondere, aber nicht ausschließlich Waschprogramme, Trockenprogramme, Spülprogramme, Garprogramme, Warmwasserbereitungsprogramme und dergleichen. Ein Programmablauf enthält vorzugsweise einen oder mehrere Betriebsparameter (z.B. Temperatur, Drehzahl, Druck, Durchflussmenge) für eine oder mehrere aufeinander folgende Zeitdauern. Die vordefinierten Programmabläufe können in diesem Zusammenhang mit allen Betriebsparametern komplett vorgegeben sein oder einzelne, frei oder aus einer Auswahl wählbare Betriebsparameter enthalten. Beispielsweise enthält eine Waschmaschine als Elektrogerät komplett vorgegebene Programmabläufe (z.B. Buntwäsche, Kochwäsche, etc.) oder Programmabläufe mit einzelnen auswählbaren Betriebsparametern (z.B. Buntwäsche mit verschiedenen Laugentemperaturen und/oder Schleuderdrehzahlen, etc.).

Gemäß der Erfindung kann das Steuergerät den von einem Benutzer angewählten Programmablauf nicht nur vor oder zum Programmstart abändern, sondern auch noch während der Ausführung des Programmablaufes. So kann das Elektrogerät insbesondere auf volatile Energieversorgungsnetze schneller und besser reagieren.

Um ein gewünschtes bzw. zufriedenstellendes Ergebnis des jeweiligen Programmablaufes, der vom Benutzer angewählt worden ist, zu gewährleisten, kann dieser Programmablauf nur innerhalb vorbestimmter Grenzen abgeändert werden. Vorzugsweise ist die Steuervorrichtung ausgestaltet, um wenigstens einen Betriebsparameter des angewählten Programmablaufes innerhalb vorbestimmter Grenzen abzuändern, um flexibel auf variable Energieversorgungsinformationen aus dem intelligenten Energieversorgungsnetz zu reagieren. Dieses Abändern innerhalb vorbestimmter Grenzen steht im Gegensatz zu einem freien, willkürlichen Ändern des Programmablaufes bzw. seiner Betriebsparameter. Vorzugsweise beinhaltet das Abändern wenigstens eines Betriebsparameters innerhalb vorbestimmter Grenzwerte ein wechselseitiges Abändern von wenigstens zwei Betriebsparametern. Zum Beispiel darf bei einer Waschmaschine eine angewählte Laugentemperatur nur um maximal etwa 5-10°C erhöht oder abgesenkt werden, bei gleichzeitiger Verkürzung bzw. Verlängerung der Waschdauer, um weiterhin den gewünschten Reinigungseffekt des Waschprogrammes zu erzielen. Vorzugsweise sind die Grenzen zulässiger Abänderungen bzw. Parametrierungen über funktionale Abbildungen, Kennlinienfelder oder dergleichen definiert.

Das Elektrogerät weist eine Kommunikationsschnittstelle zur Kommunikation mit einem intelligenten Energieversorgungsnetz auf. Die Kommunikation erfolgt zumindest vom Energieversorgungsnetz zum Elektrogerät, vorzugsweise aber in beiden Richtungen. Die Kommunikationsschnittstelle ist vorzugsweise an das Energieversorgungsnetz, insbesondere an das von diesem verwendete Kommunikationsprotokoll (z.B. KNX, Zigbee, etc.) angepasst. Die Kommunikationsschnittstelle ist vorzugsweise zur drahtlosen Kommunikation (z.B. Funk) und/oder leitungsgebundenen Kommunikation (z.B. PLC, Bussystem, etc.) ausgebildet. Die Kommunikationsschnittstelle ist vorzugsweise in das Elektrogerät integriert oder als separate Komponente an das Elektrogerät angeschlossen. Die Kommunikationsschnittstelle ist vorzugsweise austauschbar und/oder adaptierbar ausgebildet, sodass das Elektrogerät variabel an das jeweilige Energieversorgungsnetz bzw. sein Kommunikationsprotokoll angepasst werden kann. Besonders bevorzugt ist die Kommunikationsschnittstelle als ein Kommunikationsmodul ausgestaltet, welches ein oder mehrere Kommunikationsprotokolle unterstützen kann.

Das "intelligente Energieversorgungsnetz" weist vorzugsweise wenigstens eine Energieversorgungsquelle und ein Energiemanagementsystem (EMS) zum Überwachen, Kontrollieren und Steuern der Energieversorgung wenigstens eines angeschlossenen elektrischen Verbrauchers auf. Die wenigstens eine Energieversorgungsquelle weist vorzugsweise wenigstens eine externe Energieversorgungsquelle (z.B. öffentliches Stromnetz, mit oder ohne erneuerbare Energien) und/oder wenigstens eine lokale Energieversorgungsquelle (z.B. Photovoltaikanlage, Windkraftanlage, Blockheizkraftwerk, etc.) auf. Das EMS ist vorzugsweise mit Ein- und/oder Ausgabegeräten wie beispielsweise Bedieneinheiten, Smartphones, etc. gekoppelt (d.h. drahtlos oder leitungsgebunden verbunden).

Die "Energieversorgungsinformationen" des intelligenten Energieversorgungsnetzes bezeichnen in diesem Zusammenhang jede Art von Information betreffend die im Energieversorgungsnetz zur Verfügung stehende(n) Energie bzw. Energieströme. Zu den Energieversorgungsinformationen zählen insbesondere, aber nicht ausschließlich Informationen über eine ausreichende oder knappe Energiemenge, die aktuellen Energieverbrauchspreise, die aktuelle Belastung des Energieversorgungsnetzes durch die angeschlossenen Verbraucher, erwartete künftige Entwicklungen dieser Informationen, und dergleichen.

In einer bevorzugten Ausgestaltung der Erfindung ist die Bedienvorrichtung zum Auswählen eines Optimierungskriteriums aus wenigstens einem vorgegebenen Optimierungskriterium durch einen Benutzer des Elektrogerätes ausgestaltet und ist die Steuervorrichtung ausgestaltet, um den angewählten Programmablauf in Abhängigkeit von dem ausgewählten Optimierungskriterium abzuändern.

Über die Auswahl eines Optimierungskriteriums kann der Benutzer den Betrieb des Elektrogerätes an seine Wünsche und Bedürfnisse anpassen. Unter einem "Optimierungskriterium" soll in diesem Zusammenhang jede Zielrichtung einer möglichen Optimierung des Betriebes des Elektrogerätes verstanden werden. Zu den Optimierungskriterien zählen in diesem Sinne insbesondere, aber nicht ausschließlich die Energiekosten, die Energiemenge, die Optimierung an sich (gewünscht / nicht gewünscht), die Bevorzugung lokaler Energiequellen, die Bevorzugung erneuerbarer Energien, und dergleichen.

In einer bevorzugten Ausgestaltung der Erfindung ist die Steuervorrichtung ausgestaltet, um dem intelligenten Energieversorgungsnetz über die Kommunikationsschnittstelle eine Abänderung des angewählten Programmablaufes mitzuteilen. Auf diese Weise erhält das Energieversorgungsnetz eine entsprechende Rückmeldung und kann ggf. in entsprechender Weise darauf reagieren. Vorzugsweise kann ein Energiemanagementsystem des intelligenten Energieversorgungsnetzes die Verteilung der zur Verfügung stehenden Energie anpassen, die von den angeschlossenen Energieversorgungsquellen zur Verfügung gestellten Energiemengen anpassen, und dergleichen.

Gegenstand der Erfindung ist auch ein intelligentes Energieversorgungsnetz mit wenigstens einer Energieversorgungsquelle, einem Energiemanagementsystem und wenigstens einem oben beschriebenen Elektrogerät der Erfindung. An das Energieversorgungsnetz können ein oder mehrere Elektrogeräte der Erfindung angeschlossen sein. An das Energieversorgungsnetz können wahlweise zudem ein oder mehrere andere Elektrogeräte als elektrische Verbraucher / Lasten angeschlossen sein.

Das intelligente Energieversorgungsnetz (Smart Grid) weist vorzugsweise ein oder mehrere intelligente Stromzähler (Smart Meters) zum Erfassen des Stromverbrauches und/oder der Stromerzeugung auf.

Das Verfahren zum Steuern des Betriebs eines Elektrogerätes mit wenigstens einem Aggregat weist die folgenden Schritte auf: Anwählen eines Programmablaufes aus wenigstens einem vordefinierten Programmablauf durch einen Benutzer des Elektrogerätes; Ansteuern des wenigstens einen Aggregats nach dem angewählten Programmablauf; Empfangen von Energieversorgungsinformationen aus einem intelligenten Energieversorgungsnetz; ggf. Abändern des angewählten Programmablaufes in Abhängigkeit von den empfangenen Energieversorgungsinformationen während seiner Ausführung innerhalb vorbestimmter Grenzen; und Ansteuern des wenigstens einen Aggregats nach dem ggf. abgeänderten Programmablauf.

Mit diesem erfindungsgemäßen Verfahren können die gleichen Vorteile erzielt werden, wie sie oben in Zusammenhang mit dem erfindungsgemäßen Elektrogerät beschrieben wurden. Die Vorteile, Begriffsdefinitionen und bevorzugten Ausführungsformen dieses Betriebsverfahrens der Erfindung entsprechen jenen des oben beschriebenen Elektrogerätes der Erfindung.

Gemäß der Erfindung wird der vom Benutzer angewählte Programmablauf in Abhängigkeit von den empfangenen Energieversorgungsinformationen ggf. abgeändert. D.h. der angewählte Programmablauf wird - entsprechend den empfangenen Energieversorgungsinformationen - abgeändert, falls dies erforderlich oder wünschenswert ist bzw. von der Steuervorrichtung so beurteilt wird, oder nicht abgeändert, falls dies nicht erforderlich oder wünschenswert ist bzw. von der Steuervorrichtung so beurteilt wird oder falls dies nicht möglich ist.

In einer bevorzugten Ausgestaltung der Erfindung wird zum Abändern des angewählten Programmablaufes wenigstens ein Betriebsparameter des angewählten Programmablaufes innerhalb vorbestimmter Grenzen abgeändert.

In einer bevorzugten Ausgestaltung der Erfindung wird durch einen Benutzer ein Optimierungskriterium aus wenigstens einem vorgegebenen Optimierungskriterium ausgewählt und wird der angewählte Programmablauf in Abhängigkeit von dem ausgewählten Optimierungskriterium abgeändert. Existiert nur ein vorgegebenes Optimierungskriterium so kann dies vom Benutzer angewählt werden oder nicht.

In einer bevorzugten Ausgestaltung der Erfindung wird dem intelligenten Energieversorgungsnetz eine Abänderung des angewählten Programmablaufes mitgeteilt.

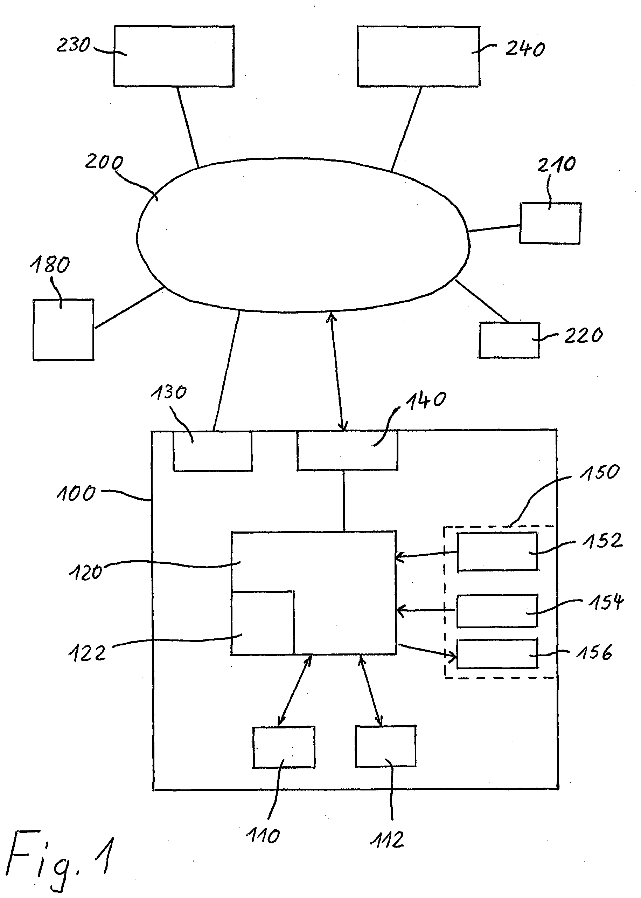

Obige sowie weitere Merkmale und Vorteile der Erfindung werden aus der nachfolgenden Beschreibung eines bevorzugten, nicht-einschränkenden Ausführungsbeispiels anhand der beiliegenden Zeichnung besser verständlich. Darin zeigt die einzige Figur 1 schematisch den Aufbau eines intelligenten Energieversorgungsnetzes mit einem Elektrogerät nach der vorliegenden Erfindung.

Figur 1 zeigt ein intelligentes Energieversorgungsnetz bzw. Stromnetz (Smart Grid) 200, welches in diesem Ausführungsbeispiel mit einem Hausautomationssystem kombiniert ist. Das Energieversorgungsnetz weist ein Energiemanagementsystem (EMS) 210 sowie wenigstens ein intelligentes Messgerät (Smart Meter) 220 auf.

Das Energiemanagementsystem 210 dient zum Überwachen, Kontrollieren und Steuern der Energieversorgung wenigstens eines angeschlossenen elektrischen Verbrauchers 100, 180. Es ist dabei mit (nicht dargestellten) Ein- und/oder Ausgabegeräten wie beispielsweise Bedieneinheiten, Smartphones, etc. gekoppelt. Das Energieversorgungsnetz 200 und seine Komponenten arbeiten mit einem bestimmten Kommunikationsprotokoll (z.B. KNX, Zigbee, etc.) und sind drahtlos (z.B. per Funk) oder leitungsgebunden (z.B. mittels PLC, Bussystem, etc.) miteinander vernetzt.

Das Energieversorgungsnetz 200 wird in diesem Ausführungsbeispiel von wenigstens einer externen Energieversorgungsquelle 240 (z.B. öffentliches Stromnetz, mit oder ohne erneuerbare Energien) und wenigstens einer lokalen Energieversorgungsquelle 230 (z.B. Photovoltaikanlage, Windkraftanlage, Blockheizkraftwerk, etc.) versorgt. Die intelligenten Messgeräte 220 dienen u.a. dem Erfassen des Stromverbrauchs der angeschlossenen Verbraucher 100, 180 und der von den Energieversorgungsquellen 230, 240 eingespeisten Strommengen.

Das Energiemanagementsystem 210 erhält diese Messwerte von den intelligenten Messgeräten 220. Außerdem empfängt das Energiemanagementsystem 210 von der wenigstens einen externen Energieversorgungsquelle 240 verschiedene Informationen über zur Verfügung stehende Strommengen, Strompreise und Stromherkunft (z.B. Anteil an erneuerbaren Energien) für den aktuellen Zeitpunkt und ggf. auch für die Zukunft. Diese Messwerte und Informationen zählen zu den Energieversorgungsinformationen im Sinne der vorliegenden Erfindung.

An dieses Energieversorgungsnetz 200 ist wenigstens ein "intelligentes" Elektrogerät 100 gemäß der vorliegenden Erfindung angeschlossen. Zusätzlich können an das Energieversorgungsnetz 200 auch noch ein oder mehrere weitere Elektrogeräte 180 angeschlossen sind, welche nicht gemäß der vorliegenden Erfindung ausgestaltet sind. Die Elektrogeräte 100 und weiteren Elektrogeräte 180 bilden elektrische Lasten bzw. Verbraucher des Energieversorgungsnetzes 200.

Bei dem erfindungsgemäßen Elektrogerät 100 handelt es sich um ein elektronisches Haushaltsgerät, wie zum Beispiel eine Waschmaschine, ein Wäschetrockner, eine Spülmaschine, ein Backofen, ein Warmwasserbereiter oder dergleichen. Zu den weiteren Elektrogeräten 180 zählen neben elektronischen Haushaltsgeräten ohne eine erfindungsgemäße Steuervorrichtung wie unten beschrieben auch andere elektronische Geräte, Aktoren, Sensoren und dergleichen, wie sie auch in herkömmlichen Hausautomationssystemen integriert sein können.

Das Elektrogerät 100 (z.B. Waschmaschine) weist in diesem Ausführungsbeispiel ein erstes Aggregat 110 (z.B. Heizung), ein zweites Aggregat 112 (z.B. Elektromotor der Wäschetrommel) und ggf. ein oder mehrere weitere, nicht dargestellte Aggregate auf. Die Aggregate 110, 112 des Elektrogerätes 100 werden von einer Steuervorrichtung 120 angesteuert und überwacht. Die Steuervorrichtung 120 weist u.a. einen Speicher 122, in dem die vordefinierten Programmabläufe des Elektrogerätes 100 abgespeichert sind, einen Mikrocontroller (nicht dargestellt) und dergleichen auf.

Wie in Figur 1 angedeutet, weist das Elektrogerät 100 zudem einen Stromanschluss 130 auf, welcher zur Stromversorgung des Elektrogerätes 100 mit dem Energieversorgungsnetz 200 verbunden werden kann. Hierzu kann typischerweise ein Stromkabel verwendet werden.

Weiter weist das Elektrogerät 100 eine Kommunikationsschnittstelle 140 zur Kommunikation seiner Steuervorrichtung 120 mit dem Energieversorgungsnetz 200 auf. Die Kommunikationsschnittstelle 140 ist zur drahtlosen und/oder leitungsgebundenen Kommunikation ausgebildet. Wahlweise kann sie auch mit dem Stromanschluss 130 kombiniert sein und beispielsweise die Stromleitungen als Kommunikationsverbindung nutzen. Außerdem kann die Kommunikationsschnittstelle 140 in das Elektrogerät 100 integriert sein oder als separate Komponente (z.B. als Modul) an dem Elektrogerät 100 angebracht sein.

Die Kommunikationsschnittstelle 140 ist an das Energieversorgungsnetz 200 bzw. das von diesem verwendete Kommunikationsprotokoll angepasst. In anderen Ausführungsbeispielen ist die Kommunikationsschnittstelle 140 variabel an das Energieversorgungsnetz 200 bzw. sein Kommunikationsprotokoll adaptierbar ausgestaltet oder als austauschbare Moduleinheit ausgestaltet.

Das Elektrogerät 100 weist ferner eine Bedienvorrichtung 150 auf, die beispielsweise in Form einer Bedienblende an dem Elektrogerät 100 vorgesehen ist. Diese Bedienvorrichtung 150 weist eine erste Eingabevorrichtung 152 für die Auswahl von Programmabläufen, eine zweite Eingabevorrichtung 154 für die Auswahl von Optimierungskriterien und eine Anzeigevorrichtung 156 auf. Die erste und zweite Eingabevorrichtung 152, 154 können wahlweise auch als eine gemeinsame Eingabevorrichtung ausgebildet sein. Ergänzend steht das Elektrogerät 100 über seine Kommunikationsschnittstelle 140 und das intelligente Energieversorgungsnetz 200 mit weiteren, entfernten Eingabe- und/oder Ausgabevorrichtungen (z.B. Smartphone, etc.) in Verbindung.

Die Steuervorrichtung 120 des Elektrogerätes ist ausgestaltet, um die Aggregate 110, 112 gemäß dem über die erste Eingabevorrichtung 152 angewählten Programmablauf zu steuern. Der angewählte Programmablauf enthält dabei ein oder mehrere vordefinierte Betriebsparameter für jeweils ein oder mehrere vordefinierte Zeitdauern. So beinhaltet zum Beispiel ein vordefiniertes Waschprogramm für Kochwäsche, welches der Benutzer aus mehreren vordefinierten Waschprogrammen auswählen kann, eine Laugentemperatur von 60°C und eine Programmdauer von 60 Minuten.

Über die Kommunikationsschnittstelle 140 empfängt die Steuervorrichtung 120 des Elektrogerätes 100 vor und während des angewählten Programmablaufes aus dem intelligenten Energieversorgungsnetz 200 Energieversorgungsinformationen. Zum Beispiel kann dem Elektrogerät 100 mitgeteilt werden, dass aktuell eine große Strommenge aus erneuerbaren Energien der lokalen Energieversorgungsquellen 230 zur Verfügung steht, die Stromkosten in Kürze in einen billigeren/teureren Stromtarif wechseln (z.B. HT/NT) und dergleichen.

Die Steuervorrichtung 120 ist ausgestaltet, um den angewählten Programmablauf vor Programmstart, aber insbesondere auch noch während der Ausführung des Programmablaufes abzuändern, wobei dieses Abändern jedoch nur innerhalb vorbestimmter Grenzen erfolgen darf. Anschließend werden die Aggregate 110, 112 von der Steuervorrichtung 120 nach dem abgeänderten Programmablauf angesteuert. Das Elektrogerät 100 bzw. seine Steuervorrichtung 120 kann so auch auf kurzfristige Veränderungen in einem volatilen Energieversorgungsnetz 200 flexibel reagieren, sodass Lastbetrieb und Energieangebot gut aufeinander abgestimmt bzw. synchronisiert werden können. Das Ergebnis sind insbesondere verbesserte Energiesparmöglichkeiten im Vergleich zu herkömmlichen Elektrogeräten.

Das Abändern des angewählten Programmablaufes durch die Steuervorrichtung 120 enthält das Verändern eines oder mehrerer Betriebsparameter (z.B. Temperatur, Drehzahl, Zeit, etc.) des Programmablaufes, vorzugsweise ein wechselseitiges Abändern von wenigstens zwei Betriebsparametern. Zum Einhalten der vorbestimmten Grenzen sind die zulässigen Veränderungen bzw.

Parametrierungen zum Beispiel über funktionale Abbildungen oder Kennlinienfelder definiert.

Die geschilderte Funktionsweise des Elektrogerätes 100 soll nun an einem konkreten Beispiel verdeutlicht werden.

Das Waschergebnis einer Waschmaschine hängt entscheidend von den Variablen der Wassertemperatur und der Waschzeit ab. Ein Benutzer hat über die erste Eingabevorrichtung 152 der Bedienvorrichtung 150 aus mehreren vordefinierten Programmabläufen zum Beispiel ein Waschprogramm mit 60°C und 60 Minuten angewählt. Zum Programmstart hat im Energieversorgungsnetz 200 ein ausgewogenes Verhältnis von Angebot und Nachfrage bestanden, weshalb die Steuervorrichtung 120 die Aggregate 110, 112 zunächst gemäß dem angewählten Programmablauf ansteuert.

Während des Waschprogramms verschlechtert sich die Stromerzeugungsleistung der lokalen Energieerzeugungsquelle 230 zum Beispiel aufgrund starker Bewölkung im Fall einer Photovoltaikanlage. Die Wetterprognosen lassen keine kurzfristige Verbesserung dieser verschlechterten Umstände erwarten. Dies wird der Steuervorrichtung 120 der Waschmaschine 100 von dem Energieversorgungsnetz 200 über die Kommunikationsschnittstelle 140 mitgeteilt.

Die Steuervorrichtung 120 ändert das ausgewählte Waschprogramm dann beispielsweise auf eine abgesenkte Temperatur von 55°C und eine verlängerte Waschdauer von 70 Minuten ab, um den Waschvorgang energiesparender durchzuführen. Diese erlaubten Eingriffsgrenzen sind in dem Speicher 122 der Steuervorrichtung 120 hinterlegt.

Eine deutlichere Veränderung der Betriebsparameter zum Beispiel auf 40°C und 2 Stunden liegt außerhalb der vorbestimmten Grenzen, da dies das Waschergebnis negativ beeinträchtigen würde.

Dem Benutzer der Waschmaschine 100 werden die vorgenommenen Änderungen zum Beispiel über die Anzeigevorrichtung 156 der Bedienvorrichtung 150 an der Waschmaschine 100 oder über sein mit dem Energiemanagementsystem 210 des Energieversorgungsnetzes 200 gekoppeltes Smartphone mitgeteilt.

Im Fall neuer Energieversorgungsinformationen aus dem Energieversorgungsnetz 200 kann die Steuervorrichtung 120 solche Abänderungen des Programmablaufes natürlich auch mehrmals vornehmen.

In einem bevorzugten Ausführungsbeispiel kann der Benutzer über die zweite Eingabevorrichtung 154 der Bedienvorrichtung 150 zudem ein Optimierungskriterium auswählen.

Zum Beispiel kann der Benutzer die oben beschrieben Funktionalität der Anpassung der Programmabläufe an das intelligente Energieversorgungsnetz grundsätzlich ein- oder ausschalten. Als Unteroptionen enthalten die Optimierungskriterien zum Beispiel eine Optimierung der Energieverbrauchskosten, eine Optimierung des Energieverbrauches, eine Optimierung der Berücksichtigung erneuerbarer Energien, eine Optimierung der Berücksichtigung der lokalen Energieerzeugungsquellen 230, etc.

Zur weiteren Verdeutlichung der Erfindung werden nachfolgend für verschiedene Elektrogeräte 100 beispielhaft mögliche Programmabläufe, Betriebsparameter und Änderungen angegeben.

Waschmaschine: Anpassung der Wassertemperatur, der Haltezeit und der Rotationsfrequenz und -sequenz in gewissen Programmstadien; Eingrenzen der Programmmannigfaltigkeit in Abhängigkeit der ausgewählten Optimierungskriterien vor dem Programmstart;
Wäschetrockner: analog Waschmaschine, Lufttemperatur anstelle Wassertemperatur, zusätzlich variable Luftgeschwindigkeiten;
Geschirrspüler: analog Waschmaschine, zusätzlich Sprühdruck, ohne variable Rotation;
Backofen: Anpassung von Temperatur und Haltezeit;
Mikrowellenofen: Anpassung von Mikrowellenleistung und Haltezeit; Dampfgarer: Anpassung von Temperatur und Zeit;
Warmwasserbereiter und Wärmepumpen: Anpassung von Leistung und Betriebszeit;
Schwimmbadpumpe: Anpassung des Volumenstroms als Funktion der Zeit; Gartenbewässerungspumpe: Anpassung des Volumenstroms als Funktion der Zeit.

### BEZUGSZIFFERNLISTE

- 100: Elektrogerät, elektronisches Haushaltsgerät
- 110: erstes Aggregat
- 112: zweites Aggregat
- 120: Steuervorrichtung
- 122: Speicher
- 130: Stromanschluss
- 140: Kommunikationsschnittstelle
- 150: Bedienvorrichtung
- 152: erste Eingabevorrichtung (Programmabläufe)
- 154: zweite Eingabevorrichtung (Optimierungskriterien)
- 156: Anzeigevorrichtung
- 180: weiteres Elektrogerät
- 200: intelligentes Energieversorgungsnetz (Smart Grid)
- 210: Energiemanagementsystem (EMS)
- 220: intelligente Stromzähler (Smart Meters)
- 230: lokale Energiequelle(n)
- 240: externe Energiequelle(n), öffentliches Stromnetz

## Patentansprüche

1. Elektrogerät (100), insbesondere elektronisches Haushaltsgerät, aufweisend:
wenigstens ein Aggregat (110, 112),
eine Bedienvorrichtung (150) zum Anwählen eines Programmablaufes aus wenigstens einem vordefinierten Programmablauf durch einen Benutzer des Elektrogerätes,
eine Steuervorrichtung (120) zum Ansteuern des wenigstens einen Aggregats (110, 112) nach dem angewählten Programmablauf, und
eine Kommunikationsschnittstelle (140), über welche die Steuervorrichtung (120) mit einem intelligenten Energieversorgungsnetz (200) kommunizieren kann,
wobei die Steuervorrichtung (120) ausgestaltet ist, um den angewählten Programmablauf in Abhängigkeit von über die Kommunikationsschnittstelle (140) aus dem intelligenten Energieversorgungsnetz (200) erhaltenen Energieversorgungsinformationen während seiner Ausführung innerhalb vorbestimmter Grenzen abzuändern und das wenigstens eine Aggregat (110, 112) nach dem abgeänderten Programmablauf anzusteuern,
**dadurch gekennzeichnet, dass**
die Steuervorrichtung (120) ausgestaltet ist, um dem intelligenten Energieversorgungsnetz (200) über die Kommunikationsschnittstelle (140) eine Abänderung des angewählten Programmablaufes mitzuteilen.

2. Elektrogerät nach Anspruch 1,
**dadurch gekennzeichnet, dass**
die Steuervorrichtung (120) ausgestaltet ist, um wenigstens einen Betriebsparameter des angewählten Programmablaufes innerhalb vorbestimmter Grenzen abzuändern.

3. Elektrogerät nach Anspruch 1 oder 2,
**dadurch gekennzeichnet, dass**
die Bedienvorrichtung (150) zum Auswählen eines Optimierungskriteriums aus wenigstens einem vorgegebenen Optimierungskriterium durch einen Benutzer des Elektrogerätes ausgestaltet ist; und
die Steuervorrichtung (120) ausgestaltet ist, um den angewählten Programmablauf in Abhängigkeit von dem ausgewählten Optimierungskriterium abzuändern.

4. Intelligentes Energieversorgungsnetz (200), aufweisend wenigstens eine Energieversorgungsquelle (230, 240), ein Energiemanagementsystem (210) und wenigstens ein Elektrogerät (100) nach einem der vorhergehenden Ansprüche.

5. Verfahren zum Steuern des Betriebs eines Elektrogerätes (100), insbesondere eines elektronischen Haushaltsgerätes, mit wenigstens einem Aggregat (110, 112), aufweisend die Schritte:
Anwählen eines Programmablaufes aus wenigstens einem vordefinierten Programmablauf durch einen Benutzer des Elektrogerätes;
Ansteuern des wenigstens einen Aggregats (110, 112) nach dem angewählten Programmablauf;
Empfangen von Energieversorgungsinformationen aus einem intelligenten Energieversorgungsnetz (200);
Abändern des angewählten Programmablaufes in Abhängigkeit von den empfangenen Energieversorgungsinformationen während seiner Ausführung innerhalb vorbestimmter Grenzen; und
Ansteuern des wenigstens einen Aggregats (110, 112) nach dem abgeänderten Programmablauf,
**dadurch gekennzeichnet, dass**
dem intelligenten Energieversorgungsnetz (200) eine Abänderung des angewählten Programmablaufes mitgeteilt wird.

6. Verfahren nach Anspruch 5,
**dadurch gekennzeichnet, dass**
zum Abändern des angewählten Programmablaufes wenigstens ein Betriebsparameter des angewählten Programmablaufes innerhalb vorbestimmter Grenzen abgeändert wird.

7. Verfahren nach Anspruch 5 oder 6,
**dadurch gekennzeichnet, dass**
durch einen Benutzer ein Optimierungskriterium aus wenigstens einem vorgegebenen Optimierungskriterium ausgewählt wird; und
der angewählte Programmablauf in Abhängigkeit von dem ausgewählten Optimierungskriterium abgeändert wird.

## Claims

1. Electrical appliance (100), in particular an electronic domestic appliance, having:
at least one assembly (110, 112),
an operating apparatus (150) for the selection of a program run from at least one predefined program run by a user of the electrical appliance,
a control apparatus (120) for actuating the at least one assembly (110, 112) in accordance with the selected program run, and
a communications interface (140) via which the control apparatus (120) can communicate with an intelligent energy supply grid (200),
wherein the control apparatus (120) is configured to modify the selected program run depending on energy supply information obtained from the intelligent energy supply grid (200) via the communications interface (140) during execution of said program run within predetermined limits and to actuate the at least one assembly (110, 112) in accordance with the modified program run,
**characterized in that**
the control apparatus (120) is configured to communicate a modification to the selected program run to the intelligent energy supply grid (200) via the communications interface (140).

2. Electrical appliance according to Claim 1,
**characterized in that**
the control apparatus (120) is configured to modify at least one operation parameter of the selected program run within predetermined limits.

3. Electrical appliance according to Claim 1 or 2,
**characterized in that**
the operating apparatus (150) is configured for the selection of an optimization criterion from at least one preset optimization criterion by a user of the electrical appliance; and
the control apparatus (120) is configured to modify the selected program run depending on the selected optimization criterion.

4. Intelligent energy supply grid (200), having at least one energy supply source (230, 240), an energy management system (210) and at least one electrical appliance (100) according to one of the preceding claims.

5. Method for controlling the operation of an electrical appliance (100), in particular of an electronic domestic appliance, comprising at least one assembly (110, 112), said method having the following steps:
selection of a program run from at least one predefined program run by a user of the electrical appliance;
actuation of the at least one assembly (110, 112) in accordance with the selected program run;
reception of energy supply information from an intelligent energy supply grid (200);
modification of the selected program run depending on the received energy supply information during the execution of said program run within predetermined limits; and
actuation of the at least one assembly (110, 112) in accordance with the modified program run,
**characterized in that**
a modification to the selected program run is communicated to the intelligent energy supply grid (200).

6. Method according to Claim 5,
**characterized in.that**
in order to modify the selected program run, at least one operational parameter of the selected program run is modified within predetermined limits.

7. Method according to Claim 5 or 6,
**characterized in that**
an optimization criterion is selected from at least one preset optimization criterion by a user; and
the selected program run is modified depending on the selected optimization criterion.

## Revendications

1. Appareil électrique (100), notamment appareil ménager électronique, comprenant :
au moins un groupe (110, 112),
un dispositif d'opération (150) servant à la sélection d'une routine de programme à partir d'au moins une routine de programme prédéfinie par un utilisateur de l'appareil électrique,
un dispositif de commande (120) destiné à commander l'au moins un groupe (110, 112) d'après la routine de programme sélectionnée et
une interface de communication (140), par le biais de laquelle le dispositif de commande (120) peut communiquer avec un réseau de distribution d'énergie (200) intelligent,
le dispositif de commande (120) étant configuré pour modifier la routine de programme sélectionnée pendant son exécution au sein de limites prédéterminées en fonction d'informations d'alimentation en énergie obtenues par le biais de l'interface de communication (140) à partir du réseau de distribution d'énergie (200) intelligent et pour commander l'au moins un groupe (110, 112) d'après la routine de programme modifiée,
**caractérisé en ce que**
le dispositif de commande (120) est configuré pour communiquer une modification de la routine de programme sélectionnée au réseau de distribution d'énergie (200) intelligent par le biais de l'interface de communication (140).

2. Appareil électrique selon la revendication 1, **caractérisé en ce que** le dispositif de commande (120) est configuré pour modifier au moins un paramètre de fonctionnement de la routine de programme sélectionnée au sein de limites prédéterminées.

3. Appareil électrique selon la revendication 1 ou 2, **caractérisé en ce que** le dispositif d'opération (150) est configuré pour la sélection d'un critère d'optimisation à partir d'au moins un critère d'optimisation prédéfini par un utilisateur de l'appareil électrique ; et
le dispositif de commande (120) est configuré pour modifier la routine de programme sélectionnée en fonction du critère d'optimisation sélectionné.

4. Réseau de distribution d'énergie (200) intelligent, comprenant au moins une source d'alimentation en énergie (230, 240), un système de gestion d'énergie (210) et au moins un appareil électrique (100) selon l'une des revendications précédentes.

5. Procédé pour commander le fonctionnement d'un appareil électrique (100), notamment d'un appareil ménager électronique, comprenant au moins un groupe (110, 112), comprenant les étapes suivantes :
sélection d'une routine de programme à partir d'au moins une routine de programme prédéfinie par un utilisateur de l'appareil électrique ;
commande de l'au moins un groupe (110, 112) d'après la routine de programme sélectionnée ;
réception d'informations d'alimentation en énergie en provenance d'un réseau de distribution d'énergie (200) intelligent ;
modification de la routine de programme sélectionnée pendant son exécution au sein de limites prédéterminées en fonction des informations d'alimentation en énergie reçues ; et
commande de l'au moins un groupe (110, 112) d'après la routine de programme modifiée,
**caractérisé en ce que**
une modification de la routine de programme sélectionnée est communiquée au réseau de distribution d'énergie (200) intelligent.

6. Procédé selon la revendication 5, **caractérisé en ce que** pour modifier la routine de programme sélectionnée, au moins un paramètre de fonctionnement de la routine de programme sélectionnée est modifié au sein de limites prédéterminées.

7. Procédé selon la revendication 5 ou 6, **caractérisé en ce qu'**un critère d'optimisation est sélectionné par un utilisateur à partir d'au moins un critère d'optimisation prédéfini ; et
la routine de programme sélectionnée est modifiée en fonction du critère d'optimisation sélectionné.
